# EUROPÄISCHE PATENTSCHRIFT

(11) **EP 3 449 735 B1**
(45) Veröffentlichungstag und Bekanntmachung des Hinweises auf die Patenterteilung: **04.03.2020**
(21) Anmeldenummer: 17204711.0
(22) Anmeldetag: 30.11.2017
(51) Int. Cl.: A23L 3/00, A23L 3/16, A23L 3/22, C12H 1/18, B65B 3/00, B67C 3/22, B67C 3/02, A23L 2/46, B65B 31/04, B65B 3/04

(54) **VORRICHTUNG UND VERFAHREN ZUR PASTEURISIERUNG UND ABFÜLLUNG VON MEDIUM**
DEVICE AND PROCESS FOR PASTEURISING AND DISPENSING OF A MEDIUM
DISPOSITIF ET PROCÉDÉ DE PASTEURISATION ET DE REMPLISSAGE AVEC UN MILIEU

(30) Priorität: 04.09.2017 DE 102017215436
(43) Veröffentlichungstag der Anmeldung: 06.03.2019
(73) Patentinhaber: KRONES Aktiengesellschaft, 93073 Neutraubling (DE)
(72) Erfinder: Feilner, Roland, 93073 Neutraubling (DE); Runge, Torsten, 93073 Neutraubling (DE); Hoeller, Stefan, 93073 Neutraubling (DE); Thomas, Oehmichen, 93073 Neutraubling (DE)
(74) Vertreter: Grünecker Patent- und Rechtsanwälte PartG mbB

(56) Entgegenhaltungen:
- WO-A1-01/19209
- WO-A2-2010/115510
- DE-A1- 3 510 412
- DE-A1-102010 042 624
- GB-A- 2 336 757
- US-A- 2 897 082

## Beschreibung

Die Erfindung betrifft eine Vorrichtung zur Pasteurisierung und Abfüllung von Medium gemäß dem Oberbegriff des Anspruchs 1 und ein Verfahren zur Pasteurisierung und Abfüllung von Medium gemäß Anspruch 16.

### Stand der Technik

Es ist bekannt, für eine mikrobiologische Stabilisierung von Medium, wie Getränken, im Wesentlichen flüssigen Nahrungs- und Futtermitteln, im Allgemeinen eine Kurzzeiterhitzung (Pasteurisierung) des Mediums vorzunehmen. Medien, für die keine Heißabfüllung vorgesehen ist, können nach der Pasteurisierung abgekühlt und in einem Puffertank zwischengelagert und über Zuführungsvorrichtungen zu einem Füllerventilknoten einer Abfüllanlage geleitet werden. Über ein Regelventil gelangt das Medium in einen Füllerkessel der Abfüllanlage, von dem aus das Medium zu Füllern geleitet wird, mittels derer ein Befüllen von Behältern erfolgt. Das Vorsehen eines Puffertanks und eines Füllerkessels erfordert ein ausreichendes Platzangebot zum Aufstellen einer Vorrichtung zur Pasteurisierung und Abfüllung von Medium. Zudem ist die Menge an zwischengespeichertem Medium nicht vernachlässigbar.

GB 810,215 offenbart ein Verfahren zum Pasteurisieren und Abfüllen von Getränken. Ein gleichbleibender Getränkefluss wird durch einen Plattenpasteur geleitet, unabhängig von jeglichen Störungen im Abfüllprozess. Das Getränk wird durch den Pasteur zu einer Abfüllmaschine entlang einer Hauptleitung geleitet. Wenn die Getränkemenge, die durch die Hauptleitung fließt, die Kapazität der Abfüllmaschine übersteigt, wird Getränk durch eine Umgehungsleitung, die den Pasteur umgeht, zurückgeleitet. Somit kann es zu einer unerwünschten thermischen Überbelastung durch die partielle Doppelpasteurisation des zurückgepumpten Produktes kommen. Eine Pumpe schickt eine konstante Getränkemenge mit verschiedenen Drücken durch den Pasteur und der Druck in der Abfüllmaschine wird durch Regulieren des Drucks in einer Druckkammer angepasst.

DE 10 2009 007 220 A1 offenbart ein Verfahren zum Betrieb einer Pasteurisierungsanlage mit einem Primärkreislauf für ein zu pasteurisierendes Medium und einem Sekundärkreislauf, der als Heizkreislauf dient, um das Medium im Primärkreislauf zu erhitzen.

WO 2010/115510 A2 offenbart eine Produktionsanlage zum Abfüllen von flüssigem Produkt in Behälter mit einer Einrichtung zum Bereitstellen des Produkts und mit einer mit dieser Einrichtung über wenigstens eine Produktleitung verbundenen Füllmaschine zum Füllen der Behälter mit dem Produkt. Weiter umfasst die Produktionsanlage wenigstens einen an die Produktleitung angeschlossenen und einen Speicherraum für das Produkt bildenden Pufferspeicher. Der Pufferspeicher ist von einem Rohr gebildet, das vorzugsweise mehrfach gebogen und/oder gewunden und/oder gewendelt ist, wobei der Innenraum des Rohrs den Produktraum bildet.

Das Rohr kann an einem oberen Rohrende zur Ausbildung eines Inert-Gaspuffers gesteuert mit dem Druck eines Inert-Gases beaufschlagbar sein. Die Einrichtung zum Bereitstellen des Produkts kann eine KZE-Anlage sein.

Die Produktionsanlage kann weiter eine Steuervorrichtung umfassen, die in Abhängigkeit von zugeführten Messgrößen den Volumenstrom des Produkts von der Einrichtung zum Bereitstellen an die Füllmaschine und/oder in den Pufferspeicher und/oder aus dem Pufferspeicher an die Füllmaschine und/oder den Druck in dem Pufferspeicher und/oder in der Füllmaschine steuert.

### Aufgabe

Der vorliegenden Erfindung liegt die Aufgabe zugrunde, eine Vorrichtung und ein Verfahren zur Pasteurisierung und Abfüllung von Medium zur Verfügung zu stellen, die eine effiziente und kostengünstige Verwendung ermöglichen.

### Lösung

Diese Aufgabe wird gelöst mit der Vorrichtung nach Anspruch 1 und dem Verfahren nach Anspruch 16. Bevorzugte Ausführungsformen sind in den abhängigen Ansprüchen offenbart.

Im Folgenden kann ein Medium ein Getränk sein, wie Bier, Milch, Fruchtschorle, Fruchtsaft, oder ein Nahrungsmittel, wie ein flüssiges oder im Wesentlichen flüssiges, beispielsweise breiartiges, Produkt, oder ein flüssiges oder im Wesentlichen flüssiges Futtermittel oder sonstige Flüssigkeiten, wie Essig, Fischsauce.

In den im Folgenden beschriebenen Vorrichtungen wird Medium in einer Fließrichtung durch die Vorrichtung hindurch bewegt. Ein zu einem ersten Element nachgeschaltetes zweites Element befindet sich somit in der Fließrichtung stromab und entsprechend ein zu einem ersten Element vorgeschaltetes zweites Element in der Fließrichtung stromauf.

Die erfindungsgemäße Vorrichtung zur Pasteurisierung und Abfüllung von Medium in Behälter umfasst eine Kurzzeiterhitzungsanlage, KZE, zur Pasteurisierung des Mediums, ein einziges der KZE nachgeschaltetes Pufferbehältnis zur Aufnahme des Mediums und eine dem Pufferbehältnis nachgeschaltet rotierende Abfüllvorrichtung mit mindestens einem Füllventil zur Befüllung der Behälter mit dem Medium. Die Abfüllvorrichtung ist pufferfrei mit dem Pufferbehältnis verbunden.

Unter einer rotierenden Abfüllvorrichtung werden hierbei kontinuierlich oder quasikontinuierlich rotierende bzw. drehende Abfüllsysteme verstanden. Bevorzugt weisen die Abfüllsysteme mindestens zwei Abfüllventile auf, die am Umfang der Abfüllvorrichtung angeordnet sind. Bevorzugt sind die mindestens zwei, bevorzugt alle Abfüllventile äquidistant an diesem Umfang des Füllerkarussells verteilt.

Dadurch, dass die Abfüllvorrichtung pufferfrei mit dem einzigen Pufferbehältnis verbunden ist, kann auf einen der beiden in herkömmlichen Vorrichtungen zur Pasteurisierung und Abfüllung üblichen Pufferbehältnissen (Kessel, Puffertank) verzichtet werden. Somit kann das insgesamt zwischengepufferte Volumen von Medium reduziert werden, was in einer verbesserten Effizienz der Vorrichtung resultiert, da am Füllende oder bei einem Mediumwechsel weniger oder überhaupt kein Medium mehr verworfen werden muss. Auch ist weniger Platz für die Vorrichtung erforderlich aufgrund der Einsparung eines der üblichen Pufferbehältnisse.

Unter pufferfrei wird hierbei verstanden, dass keine dedizierte Vorrichtung vorliegt, welche das puffernde Aufnehmen von Medium, beispielsweise während Produktionspausen oder bei Störungen der Abfüllvorrichtung, ermöglicht. Als Pufferbehältnis werden hier insbesondere nicht die im allgemeinen vorliegenden Rohrleitung/Zuleitungen verstanden, durch die hindurch das Medium fließt und die während des Abfüllbetriebs entweder über ihren gesamten Querschnitt hinweg oder zumindest über einen Teil ihres Querschnitts hinweg mit dem Medium befüllt sind. Auch eine Ringleitung oder ein Ringkanal in einem Füllerkarussell, die die jeweiligen Füllventile mit Medium versorgt, ist kein Pufferbehältnis gemäß dem vorliegenden Verständnis, da diese komplett mit Flüssigkeit gefüllt ist und somit kein weiteres Volumen aufnehmen kann.

Unter einem Pufferbehältnis wird vielmehr nur ein dediziertes als solches vorgesehenes Pufferreservoir verstanden, das ein entsprechendes Puffervolumen bereitstellt. Damit kann das Pufferbehältnis eine substantielle Menge an zusätzlichem Medium aufnehmen, das in Pausen des Abfüllbetriebs oder bei Anlagenstörung anfällt und nicht direkt von der Abfüllvorrichtung abgenommen werden kann. Das Pufferbehältnis kann damit stets einen Raum frei von Medium, auch Kopfraum genannt oberhalb seines Füllstandes aufweisen, der dazu vorgesehen ist, zusätzliches Medium aufzunehmen.

Zwischen der Abfüllvorrichtung und dem Pufferbehältnis liegen nur Rohrleitungen (auch Zuleitungen genannt) und/oder ein oder mehrere Drehverteiler vor. Um das Medium von einem stehenden Teil der Vorrichtung, in dem beispielsweise das Pufferbehältnis und eine Abfüllleitung vorgesehen sind, auf ein sich relativ dazu drehendes Füllerkarussell zu übergeben, kann der Drehverteiler vorgesehen sein. Der Drehverteiler kann das über Zuleitung zugeführte Medium bzw. Kohlendioxid auf weitere Zuleitung am Füllerkarussell übergeben, wobei die weiteren Zuleitungen das Medium bzw. das Kohlendioxid dann an die Füllventile weiterleiten.

Neben den Rohrleitungen und/oder dem einen oder den mehreren Drehverteilern können zudem Durchflussmesser, Sensoren, Ventile und/oder Steuerungsvorrichtungen vorgesehen sein.

In einer ersten Ausführungsform kann das einzige Pufferbehältnis als ein Kessel oder Ringbehältnis der Abfüllvorrichtung ausgebildet sein. Unter einem Ringbehältnis ist dabei ein ringförmiges Pufferbehältnis zu verstehen, das nicht vollständig mit Medium gefüllt ist und einen Kopfraum zur Aufnahme weiteren Mediums aufweist.

In einer zweiten Ausführungsform kann das einzige Pufferbehältnis als ein Puffertank der KZE ausgebildet sein.

Beide Ausführungsformen bieten die Möglichkeit, dass nur ein einziges Pufferbehältnis vorgesehen wird und nicht sowohl ein Kessel als auch ein Puffertank vorgesehen werden müssen.

Die Abfüllvorrichtung kann ein Proportionalventil zum Steuern und/oder Regeln eines Abfüllstroms des Mediums in die Behälter umfassen, wobei vorzugsweise das Proportionalventil dazu ausgelegt ist, unterschiedliche vorbestimmte Abfüllströme zu steuern und/oder zu regeln und/oder stufenlose Abfüllströme zu steuern und/oder zu regeln.

Das Proportionalventil kann elektronische Steuerungskomponenten umfassen, die dezentral in jedes Füllventil der Abfüllvorrichtung eingebaut werden können. Mittels des Proportionalventils können die Abfüllströme, z.B. deren Fließgeschwindigkeit, frei wählbar, also stufenlos, eingestellt werden. Somit ist eine optimale Anpassung an unterschiedlichste Kombinationen von Mediumart und Behältertyp möglich.

Eine Vorspannvorrichtung zum Vorspannen des Pufferbehältnisses mit Kohlendioxid oder mit einer Kohlendioxid-Stickstoff-Mischung kann vorgesehen sein.

Ein Vorspannen des Pufferbehältnisses kann erforderlich sein, damit in dem Medium gelöstes Kohlendioxid nicht ausgast und das Medium nicht durch Umgebungsluft geschädigt wird.

Die KZE kann einen Primärkreislauf für das Medium und einen Sekundärkreislauf umfassen, wobei der Sekundärkreislauf als Heizkreislauf dient, um das Medium im Primärkreislauf zu erhitzen.

Der Primärkreislauf kann durch einen ersten Wärmetauscher, einen dem ersten Wärmetauscher nachgeschalteten zweiten Wärmetauscher und eine dem zweiten Wärmetauscher nachgeschaltete Heißhaltestrecke verlaufen und der Sekundärkreislauf kann durch den zweiten Wärmetauscher und einen dritten Wärmetauscher verlaufen.

In einer derartigen zweistufigen KZE kann zu pasteurisierendes Medium in dem ersten Wärmetauscher (Rekuperator) durch das von der Heißhaltestrecke abfließende, bereits zuvor pasteurisierte Medium erwärmt werden. In dem zweiten Wärmetauscher (Erhitzer) wird das zu pasteurisierende, erwärmte Medium in dem Primärkreislauf auf die endgültige Pasteurisierungstemperatur erhitzt, die dann in der Heißhaltestrecke im Wesentlichen konstant bleibt. Die Länge der Heißhaltestrecke und die Fließgeschwindigkeit des Mediums bestimmt hierbei die Dauer der Kurzzeiterhitzung. Anschließend fließt das pasteurisierte Medium durch den ersten Wärmetauscher und gibt dort seine Wärme an das im Gegenstrom zufließende zu pasteurisierende Medium ab. Das pasteurisierte und auf eine Endtemperatur abgekühlte Medium kann in das Pufferbehältnis fließen.

Vorzugsweise umfasst die KZE weiter einen Kühlkreislauf, der über einen vierten Wärmetauscher in thermischen Kontakt mit dem Primärkreislauf stehen kann. In einer derartigen dreistufigen KZE kann das pasteurisierte Produkt durch den vierten Wärmetauscher im Gegenstrom zu einem Kühlmittel fließen und dadurch weiter abgekühlt werden.

Die Vorrichtung kann weiter eine Steuerungsvorrichtung umfassen.

Die Steuerungsvorrichtung kann dazu ausgebildet sein, bei einer Reduktion einer Füllerleistung der Abfüllvorrichtung eine Leistung der KZE proportional zu der Füllerleistung zu reduzieren, vorzugsweise bis zu 50% einer Nennleistung der KZE.

Die Steuerungsvorrichtung kann weiter oder alternativ dazu ausgebildet sein, bei einer Erhöhung der Füllerleistung der Abfüllvorrichtung die Leistung der KZE proportional zu der Füllerleistung zu erhöhen, vorzugsweise bis zu der Nennleistung der KZE.

Die Steuerungsvorrichtung kann weiter oder alternativ dazu ausgebildet sein, die KZE derart zu steuern, dass ein Füllniveau in dem Pufferbehältnis in einem Bereich von 10 %, vorzugsweise 5 %, des Behältnisvolumens des Pufferbehältnisses liegt. Somit kann erreicht werden, dass das Füllniveau konstant niedrig bleibt.

Die Regelung der Leistung der KZE kann indirekt über den Füllstand des Pufferbehältnisses oder direkt über die Füllerleistung erfolgen. Mit Füllerleistung kann dabei entweder eine pro Zeiteinheit abgefüllte Menge an Behältern, über welche mit Hilfe der Behältergröße die abgefüllte Menge an Medium errechnet werden kann, oder die Summe aller Massenströme der Füllventile verstanden werden.

Die Steuerungsvorrichtung kann weiter oder alternativ dazu ausgebildet sein, einen Maximalfüllstand des Pufferbehältnisses derart zu steuern, dass es im Falle einer Vermischung mit dem möglicherweise überpasteurisierten Medium der Vorrichtung zu keiner messbaren und/oder geschmacklichen Beeinträchtigung des Mediums kommt. Das Verhältnis zwischen Anlageninhalt (produktseitig) und einem Behältnisvolumen des Pufferbehältnisses kann zwischen 0,05 : 1 und 0,5 : 1, vorzugsweise zwischen 0,1 : 1 und 0,3 : 1 betragen.

Die Steuerungsvorrichtung kann weiter oder alternativ dazu ausgebildet sein, eine definierte Überströmung des Mediums zurück in einen Eingang der KZE durchzuführen. Unter definierter Überströmung ist zu verstehen, dass ein Teil des pasteurisierten Mediums (d.h. Medium, das die KZE bereits passiert hat), bevor es der Abfüllung zugeführt wird, wieder zurück in den Einlauf der KZE geführt wird. Der Teil des pasteurisierten Mediums kann dabei entweder vor Eintritt in das Pufferbehältnis zurück geführt werden oder nachdem es dem Pufferbehältnis zugeführt wurde. Die definierte Überströmung bietet beispielsweise den Vorteil, dass die Zufuhr an Medium in den Eingang der KZE auf ein Niveau unterhalb einer Minimal-Leistung reduziert werden kann. Die KZE wird dabei mit einer Leistung entsprechend der Minimal-Leistung betrieben, jedoch wird stets ein Teil des pasteurisierten Mediums, bevor es der Abfüllung zugeführt wird, wieder zurück in den Einlauf der KZE geführt. Somit wird die in die Puffervorrichtung strömende Menge an Medium auf ein Niveau reduziert, welches unterhalb der Minimal-Leistung der KZE liegt. Somit kann die Zeit bis zum Erreichen eines maximalen Füllstands des Pufferbehältnisses, z.B. bei einem Stopp der Abnahme der Abfüllanlage, deutlich verlängert werden.

Umfasst die KZE einen Primärkreislauf, einen Sekundärkreislauf und eine Heißhaltestrecke, so kann die Steuerungsvorrichtung kann weiter oder alternativ dazu ausgebildet sein, eine Temperaturregelung und ein Konstanthalten einer vorgegebenen Anzahl von Pasteurisierungseinheiten, PE, des Mediums durchzuführen.

Unter Temperaturregelung ist im Sinne der vorliegenden Erfindung zu verstehen, dass die Temperatur des zweiten Wärmetauschers und damit die Temperatur der Heißhaltestrecke in Abhängigkeit der Leistung der KZE angepasst werden. Somit kann eine reduzierte Leistung bzw. ein reduzierter Massenstrom an Medium zu einer erhöhten Verweilzeit in der Heißhaltestrecke führen. Um die damit verbundene Überpasteurisierung zu verhindern, wird im Gegenzug die Temperatur des zweiten Wärmetauschers herabgesetzt. Somit bleibt bei reduzierter Leistung der KZE die Anzahl an PE gleich.

Die Steuerungsvorrichtung kann weiter oder alternativ dazu ausgebildet sein, ein Beibehalten einer Temperatur der Heißhaltestrecke und eine Reduzierung eines Stroms des Mediums durchzuführen.

Die Steuerungsvorrichtung kann weiter oder alternativ dazu ausgebildet sein bei einem Stopp der Abfüllvorrichtung die KZE mit einer Minimal-Leistung, bevorzugt 50% der Nennleistung, zu betreiben und/oder eine definierte Überströmung des Mediums zurück in einen Eingang der KZE durchzuführen, das Pufferbehältnis bis zu einem Maximalfüllstand zu füllen, bei Erreichen des Maximalfüllstandes die Zufuhr von Medium zu der Vorrichtung zu stoppen, den Primärkreislauf unter definierten Bedingungen - insbesondere unter Aufrechterhalten des Druckes in der KZE - zu stoppen, den Sekundärkreislauf des zweiten Wärmetauschers weiter zu betreiben und sukzessive die Temperatur des Sekundärkreislaufes zu erhöhen, um den Verlust an Energie im Primärkreislauf beim Wiederanfahren zu kompensieren. Vorzugsweise liegt der Druck in der KZE über dem Sättigungsdruck.

Eine sukzessive Erhöhung der Temperatur des Sekundärkreislaufs kann bis zu einer Maximaltemperatur erfolgen, die von dem Medium abhängt, wobei die Maximaltemperatur unterhalb einer Temperatur liegt, ab der irreversible Schäden am Medium entstehen, die beispielsweise eine Geschmacksveränderung bedingen, und oder die von der Vorrichtung abhängt und durch eine maximal zulässige Betriebstemperatur und/oder durch die Temperatur des Dampfs, der für die Erhitzung des Sekundärkreislaufs im Erhitzer verwendet wird, vorgegeben werden kann.

Durch das Betreiben des Sekundärkreislaufs gerade nach dem Anhalten des Flusses des Mediums im Primärkreislauf, kann das Heizmittel im Sekundärkreislauf des zweiten Wärmetauschers weiterhin erhitzt und/oder auf einer vorgegebenen Temperatur gehalten werden. So kann eine Hitzebarriere zwischen den beiden Hygienebereichen der Anlage geschaffen werden.

Unterschreitet die Temperatur der Heißhaltestrecke nach dem Anhalten des Flusses des Mediums im Primärkreislauf einen Minimalwert, kann der Primärkreislauf für eine vorgegebene Zeitdauer wieder angefahren werden. Der Minimalwert kann einer Temperatur entsprechen, die es noch möglich macht, dass das Medium im Primärkreislauf von dem Sekundärkreislauf nachgeheizt wird. Dabei wird das Medium allerdings nicht in das Pufferbehältnis geführt, sondern zurück in den Eingang der KZE. Durch diese Kreislaufführung bzw. interne Zirkulation wird der ursprüngliche Zustand der Temperaturen im zweiten Wärmetauscher und insbesondere in der Heißhaltestrecke wieder hergestellt. Sobald dieser Zustand erreicht ist, kann der Primärkreislauf wieder gestoppt werden.

Die Steuervorrichtung kann weiter oder alternativ eine Zählvorrichtung für eine Aufsummierung von PE umfassen, die durch das Medium aufgenommen werden. Damit kann es, z.B. bei Stillstand des Primärkreislaufes, möglich sein, die Überpasteurisierung des Produktes zu bestimmen. Es kann somit eine partielle Aufsummierung der PE pro Volumina erfolgen. Es kann aber auch eine auf den gesamten Anlageninhalt (primärseitig) gemittelte Anzahl von PE aufsummiert werden.

Die Steuerungsvorrichtung kann weiter dazu ausgebildet sein, bei einem Stopp der Zufuhr von Medium zu der Vorrichtung entweder nach Ablauf einer vorgegebenen Stillstandzeit oder nach Überschreitung einer aufsummierten Anzahl von PE das Medium zu verwerfen oder mit dem Inhalt des Pufferbehältnisses zu vermischen. Eine Vermischung erfolgt vorzugsweise derart, dass dies keine messbare Auswirkung auf die Produktqualität hat, beispielsweise durch Steuerung eines Mischungsverhältnisses des Mediums in dem Pufferbehältnis und des zugeführten Mediums. Die maximale Anzahl von PE kann dabei um eine vorgegebene Prozentzahl über der regulären Anzahl von PE im normalen Betrieb der Anlage liegen. Dieser Prozentsatz ist von der Pufferbehältnis- und Anlagengröße sowie kundenspezifischen Anforderungen abhängig.

Das Pufferbehältnis kann mit Leiteinrichtungen bzw. Leitelementen, wie beispielsweise Umlenkblechen, versehen sein. Dadurch kann eine besonders effiziente Vermischung von in das Pufferbehältnis strömenden Medium und dem Medium, welches sich bereits im Pufferbehältnis befindet, ermöglicht werden.

Die Füllvorrichtung kann ein Füllerkarussell mit Füllventilen sein, die vorzugsweise als Proportionalventile ausgebildet sind.

Der Füllstand im Pufferbehältnis kann über der Abfüllvorrichtung, insbesondere über dem Abfüllventil, liegen. Aufgrund des hydrostatischen Druckes wird eine besonders effiziente Durchströmung des Abfüllventils erreicht. Insbesondere liegt der Füllstand im Bereich zwischen 0,5 m und 10 m über dem Abfüllventil, besonders bevorzugt im Bereich zwischen 2 und 4 m.

Das Pufferbehältnis kann als liegender bzw. horizontaler Tank ausgeführt sein.

In einem Verfahren zur Pasteurisierung und Abfüllung von Medium in Behälter wird ein Befüllen der Behälter mit dem Medium mittels einer Vorrichtung wie oben oder weiter unten beschrieben pufferfrei mittels der Füllvorrichtung durchgeführt.

Das Verfahren kann die folgenden Schritte umfassen:
- Pasteurisieren des Mediums in der KZE,
- danach Puffern des pasteurisierten Mediums in dem Pufferbehältnis,
- danach Abfüllen des pasteurisierten Mediums in die Behälter, wobei das pasteurisierte Medium pufferfrei von dem Pufferbehältnis zu der Abfüllvorrichtung transportiert wird

Die beigefügten Figuren stellen beispielhaft zum besseren Verständnis und zur Veranschaulichung Aspekte der Erfindung dar. Es zeigt:
- Figur 1: eine erste Ausführungsform einer Vorrichtung zur Pasteurisierung und Abfüllung von Medium in Behälter und
- Figur 2: eine zweite Ausführungsform einer Vorrichtung zur Pasteurisierung und Abfüllung von Medium in Behälter.

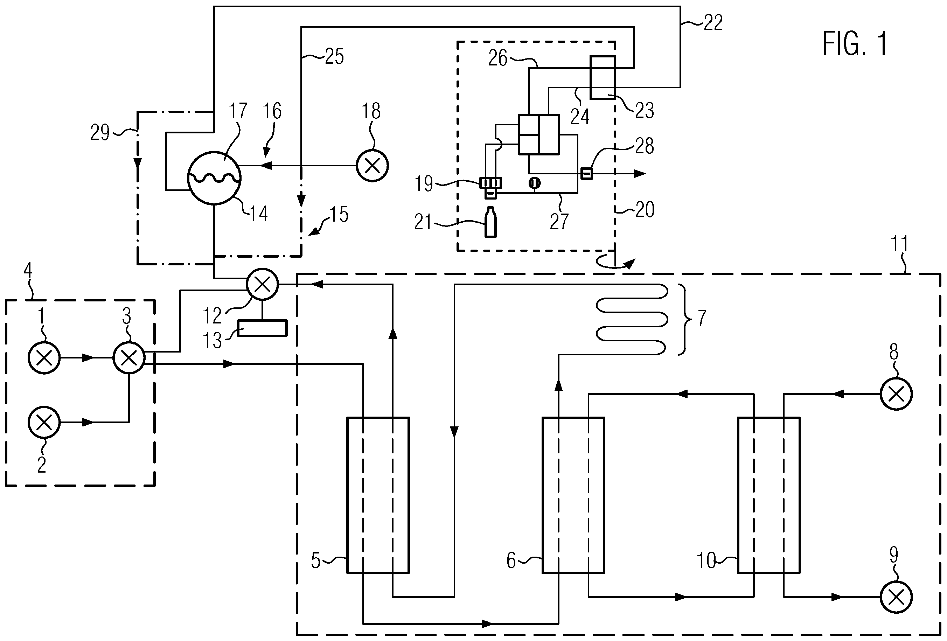

Die Figur 1 zeigt eine erste Ausführungsform einer Vorrichtung zur Pasteurisierung und Abfüllung von Medium in Behälter 21. Mittels eines ersten Einlasses 1 wird der Kurzzeiterhitzungsanlage 11, KZE, zu behandelndes Medium zugeführt. Mittels eines zweiten Einlasses 2 wird der KZE 11 ein weiteres Medium zugeführt. Bei diesem weiteren Medium handelt es sich insbesondere um Wasser. Dieser zweite Einlass 2 ist dafür vorgesehen, die Anlage in Betrieb zu nehmen und nach Produktionsende das noch in der Anlage verbleibende Produkt auszuschieben. Das zu behandelnde Medium gelangt über ein erstes Ventil 3 in einen Primärkreislauf der KZE 11. Das Medium fließt durch einen ersten Wärmetauscher (Rekuperator) 5 und danach zu und durch einen zweiten, dem ersten Wärmetauscher 5 nachgeschalteten zweiten Wärmetauscher (Erhitzer) 6. Dann durchfließt das Medium eine Heißhaltestrecke 7, bevor es im Gegenstrom zum zufließenden Medium den Rekuperator 5 durchfließt und zu einem zweiten Ventil 12 kommt.

In einem Sekundärkreislauf der KZE 11 kann erhitztes Heizmittel, beispielsweise Wasser, fließen, wodurch der Sekundärkreislauf als Heizkreislauf dienen kann. Das Heizmittel fließt durch den Erhitzer 6, in dem es Energie abgegeben kann, und durch einen dritten Wärmetauscher (Heißwasserbereiter) 10, in dem es Energie aufnehmen kann, fließen. Der Heißwasserbereiter 10 kann in thermischen Kontakt zu einem Dampf-Kondensat-Kreislauf stehen, in den über ein drittes Ventil 8 Dampf eingebracht und über ein viertes Ventil 9 Kondensat abgelassen werden kann. Beispielsweise kann Wasserdampf verwendet werden.

Vom zweiten Ventil 12 kann das Medium in einen Auffangbehälter 13, um z.B. entsorgt zu werden, zurück zum ersten Ventil 3 und/oder zu einem Pufferbehältnis 14 fließen.

Optional (kenntlich durch die strichpunktierte Linie) kann der KZE 11 nachgeschaltet eine Karbonisierungsvorrichtung 15 zum Einbringen von Kohlendioxid in das Medium bevor es in das Pufferbehältnis 14 gelangt, angeordnet sein, wobei hier die Karbonisierungsvorrichtung 15 zwischen der KZE 11 und dem Pufferbehältnis 14 vorgesehen ist.

Um zu vermeiden, dass Medium im Pufferbehältnis 14 Umgebungsluft aus dem Kopfraum 17 des Pufferbehältnisses 14 aufnimmt bzw. um ein Entbinden des bereits im Medium vorhandenen oder des optional aufgenommenen Kohlendioxids aus dem Medium vermeiden zu können, ist eine Vorspannvorrichtung 16 zum Vorspannen des Pufferbehältnisses 14 mit Kohlendioxid vorgesehen. Mittels der Vorspannvorrichtung 15 kann Kohlendioxid in den Kopfraum 17 des Pufferbehältnisses 14 eingebracht werden. Kohlendioxid kann aus einem Kohlendioxidspeicher 18 zugeführt werden. Da sich im Kopfraum 17 des Pufferbehältnisses 14 Rückgas aus Füllventilen 19 einer dem Pufferbehältnis 14 nachfolgenden Abfüllvorrichtung 20 ansammeln kann, kann sich im Kopfraum 17 des Pufferbehältnisses 14 während des Betriebs der Vorrichtung Umgebungsluft anreichern. Das Pufferbehältnis 14 kann daher zusätzlich dazu ausgelegt sein, ein Durchspülen des Kopfraums 17 mit Kohlendioxid zu ermöglichen.

Zudem kann Kohlendioxid mittels einer Gaszuleitung 25 zu der Abfüllvorrichtung 20 geleitet werden.

Auch kann vorgesehen sein, eine Vorspannrichtung zu verwenden die mit einer Kohlendioxid-Stickstoff-Mischung arbeitet. Die Vorspannrichtung kann dann zusätzlich mit Stickstoff versorgt werden oder es kann ein Kohlendioxid-Stickstoff-Speicher vorgesehen sein.

Das Medium gelangt von dem Pufferbehältnis 14 direkt zu der Abfüllvorrichtung 20. Durch die direkte Verbindung mittels einer Mediumzuleitung 22 zwischen dem Pufferbehältnis 14 und der Abfüllvorrichtung 20, ist ein Zwischenpuffern von Medium in diesem Bereich nicht vorgesehen und auch nicht möglich.

Herkömmliche Zuleitungen werden in diesem Zusammenhang nicht als Pufferbehältnis verstanden. Als Pufferbehältnis wird vielmehr nur ein dedizierte als Puffer ausgebildetes Reservoir verstanden, das ein entsprechendes Puffervolumen aufweist, das nicht allein den Transport des Mediums dient, sondern das ein Zwischenspeichern des Mediums ermöglicht.

Das Füllventil 19 ist an einer schematisch angedeuteten Abfüllvorrichtung 20 vorgesehen, die hier als Füllerkarussell ausgebildet ist, an dessen Umfang üblicherweise eine Mehrzahl von Füllventilen 19 angeordnet ist. Ein Füllerkarussell ist in Getränkeabfüllanlagen üblicherweise vorgesehen, um einen steten Strom an zu befüllenden Behältern 21 aufzunehmen, diese während des Umlaufs mittels der jeweiligen Füllventile 19 mit dem Medium zu befüllen und die dann befüllten Behälter 21 an eine nachfolgende Transport- oder Verarbeitungsvorrichtung auszugeben.

Um das Medium von einem stehenden Anlagenteil der Vorrichtung, in dem unter anderem das Pufferbehältnis 14, die Mediumzuleitung 22 und die Gaszuleitung 25 vorgesehen sind, auf die sich relativ dazu drehende Abfüllvorrichtung 20 zu übergeben, ist ein Drehverteiler 23 vorgesehen. Der Drehverteiler 23 übergibt entsprechend das über die Mediumzuleitung 22 zugeführt Medium auf eine erste Füllleitung 24 und das über die Gaszuleitung 25 zugeführte Kohlendioxid auf eine zweite Füllleitung 26 an die Abfüllanlage 20, mit der das Medium und das Kohlendioxid dann an das Füllventil 19 geleitet werden.

Um eine Entlüftung eines mit karbonisierten Medium befüllten Behälters 21 am Füllventil 19 vor dem Entfernen des Behälters 21 von dem Füllventil 19 zu ermöglichen, ist eine Entgasungsleitung 27 vorgesehen, die über einen weiteren Drehverteiler 28 zur Abluft führt.

Optional (kenntlich durch die strichpunktierte Linie) kann die erste Ausführungsform der Vorrichtung zudem eine Rückführleitung 29 umfassen, die dem Pufferbehältnis 14 nachgeordnet ist und von der Mediumzuleitung 22 ausgeht und zu einer Zuleitung zwischen dem zweiten Ventil 12 und dem Pufferbehältnis 14 führt. Diese Rückführleitung 29 ist für den Fall vorgesehen, dass Bier vor dem Eintritt in das Pufferbehältnis zusätzlich karbonisiert wird. Das Karbonisieren kann dabei mit einer Venturidüse erfolgen. Da die Venturidüse zum optimalen Betrieb einen konstanten Volumenstrom benötigt, dieser aber z.B. bei reduzierter Leistung nicht gewährleistet werden kann, wird somit ein Teil des Mediums aus dem Pufferbehältnis im Kreis gefahren.

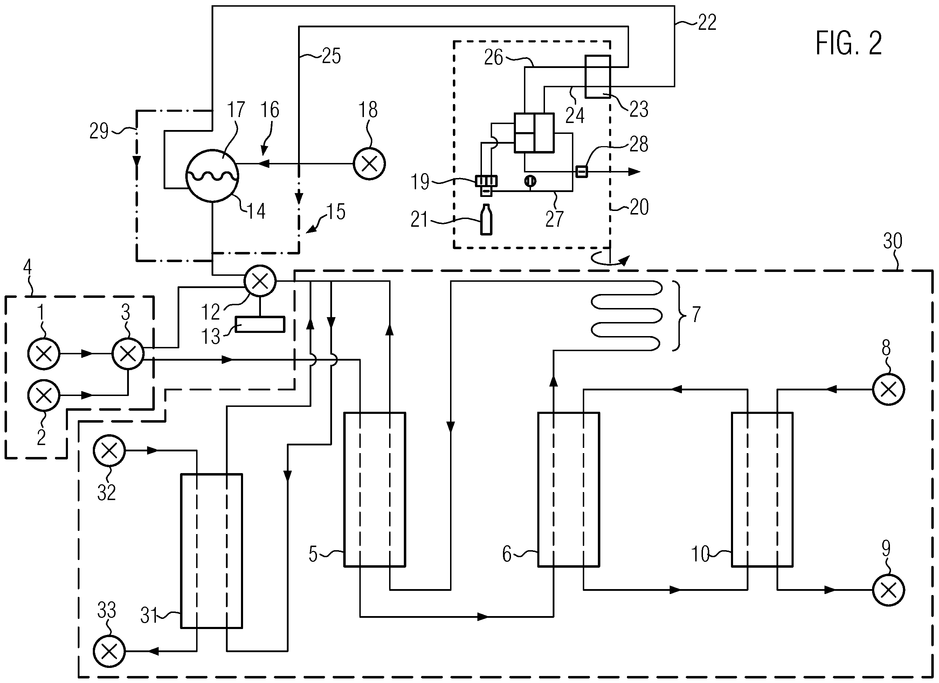

Die Figur 2 zeigt eine zweite Ausführungsform einer Vorrichtung zur Pasteurisierung und Abfüllung von Medium in Behälter. Im Vergleich zu der ersten Ausführungsform umfasst die KZE 30 neben den Elementen der KZE der ersten Ausführungsform der Vorrichtung zudem einen Kühlkreislauf, der über einen vierten Wärmetauscher (Kühler) 31 in thermischen Kontakt mit dem Primärkreislauf im Bereich zwischen Rekuperator 5 und zweiten Ventil 12 steht, wodurch beispielsweise pasteurisiertes Medium abgekühlt werden kann. In den Kühlkreislauf kann durch ein fünftes Ventil 32 Kühlmittel eingebracht werden und kann nach Durchfließen des Kühlers 31 durch ein sechstes Ventil 33 abgelassen werden.

## Patentansprüche

1. Vorrichtung zur Pasteurisierung und Abfüllung von Medium in Behälter (21), wobei die Vorrichtung umfasst:
- eine Kurzzeiterhitzungsanlage (11, 30), KZE, zur Pasteurisierung des Mediums,
- ein einziges der KZE (11, 30) nachgeschaltetes Pufferbehältnis (14) zur Aufnahme des Mediums,
- eine dem Pufferbehältnis (14) nachgeschaltete rotierende Abfüllvorrichtung (20) mit mindestens einem Füllerventil (19) zur Befüllung der Behälter (21) mit dem Medium,
**dadurch gekennzeichnet, dass**
die Abfüllvorrichtung (20) pufferfrei mit dem Pufferbehältnis (14) verbunden ist und zwischen der Abfüllvorrichtung (20) und dem Pufferbehältnis (14) nur Rohrleitungen (22, 25) und/oder ein oder mehrere Drehverteiler (23) vorliegen.

2. Vorrichtung nach Anspruch 1, wobei das einzige Pufferbehältnis (14) als ein Kessel oder Ringbehältnis der Abfüllvorrichtung (20) ausgebildet ist oder wobei das Pufferbehältnis (14) als ein Puffertank der KZE (11, 30) ausgebildet ist.

3. Vorrichtung nach Anspruch 1 oder 2, wobei die KZE (11, 30) einen Primärkreislauf für das Medium und einen Sekundärkreislauf umfasst, wobei der Sekundärkreislauf als Heizkreislauf dient, um das Medium im Primärkreislauf zu erhitzen, wobei vorzugsweise der Primärkreislauf durch einen ersten Wärmetauscher (5), einen dem ersten Wärmetauscher (5) nachgeschalteten zweiten Wärmetauscher (6) und eine dem zweiten Wärmetauscher (6) nachgeschaltete Heißhaltestrecke (7) verläuft, wobei vorzugsweise der Sekundärkreislauf durch den zweiten Wärmetauscher (6) und einen dritten Wärmetauscher (10) verläuft, wobei vorzugsweise die KZE (30) weiter einen Kühlkreislauf umfasst, der über einen vierten Wärmetauscher (31) in thermischen Kontakt mit dem Primärkreislauf steht.

4. Vorrichtung nach einem der Ansprüche 1 bis 3, wobei die Abfüllvorrichtung (20) ein Proportionalventil zum Steuern und/oder Regeln eines Abfüllstroms des Mediums in die Behälter (21) umfasst, wobei vorzugsweise das Proportionalventil dazu ausgelegt ist, unterschiedliche vorbestimmte Abfüllströme zu steuern und/oder zu regeln und/oder stufenlose Abfüllströme zu steuern und/oder zu regeln, wobei vorzugsweise die Abfüllvorrichtung (20) als Füllerkarussell ausgebildet ist.

5. Vorrichtung nach einem der Ansprüche 1 bis 4, weiter umfassend eine Vorspannvorrichtung (16) zum Vorspannen des Pufferbehältnisses (14) mit Kohlendioxid oder mit einer Kohlend ioxid-Stickstoff-Mischung.

6. Vorrichtung nach einem der Ansprüche 1 bis 5, weiter umfassend eine Steuerungsvorrichtung.

7. Vorrichtung nach Anspruch 6, wobei die Steuerungsvorrichtung dazu ausgebildet ist, bei einer Reduktion einer Füllerleistung der Abfüllvorrichtung (20) eine Leistung der KZE (11, 30) proportional zu der Füllerleistung zu reduzieren, vorzugsweise bis zu 50% einer Nennleistung der KZE (11, 30), und/oder wobei die Steuerungsvorrichtung weiter dazu ausgebildet ist, bei einer Erhöhung der Füllerleistung der Abfüllvorrichtung (20) die Leistung der KZE (11, 30) proportional zu der Füllerleistung zu erhöhen, vorzugsweise bis zu der Nennleistung der KZE (11, 30).

8. Vorrichtung nach Anspruch 6 oder 7, wobei die Steuerungsvorrichtung weiter dazu ausgebildet ist, einen Maximalfüllstand des Pufferbehältnisses (14) derart zu steuern, dass es im Falle einer Vermischung mit möglicherweise überpasteurisierten Medium zu keiner messbaren und/oder geschmacklichen Beeinträchtigung der Mediumqualität kommt, wobei vorzugsweise das Verhältnis zwischen Anlageninhalt und einem Behältnisvolumen des Pufferbehältnisses zwischen 0,05 : 1 und 0,5 : 1, vorzugsweise zwischen 0,1 : 1 und 0,3 : 1 beträgt.

9. Vorrichtung nach einem der Ansprüche 6 bis 8, wobei die Steuerungsvorrichtung weiter dazu ausgebildet ist, eine Temperaturregelung und ein Konstanthalten einer vorgegebenen Anzahl von Pasteurisierungseinheiten, PE, des Mediums durchzuführen und/oder eine definierte Überströmung des Mediums zurück in einen Eingang der KZE (11, 30) durchzuführen.

10. Vorrichtung nach einem der Ansprüche 6 bis 9, wobei die Steuerungsvorrichtung weiter dazu ausgebildet ist, bei einem Stopp der Abfüllvorrichtung (20) die KZE (11, 30) mit einer Minimal-Leistung, bevorzugt 50% der Nennleistung, zu betreiben und/oder eine definierte Überströmung des Mediums zurück in einen Eingang der KZE (11, 30) durchzuführen, das Pufferbehältnis (14) bis zu einem Maximalfüllstand zu füllen, bei Erreichen des Maximalfüllstandes die Zufuhr von Medium zu der Vorrichtung zu stoppen, den Primärkreislauf unter definierten Bedingungen zu stoppen, den Sekundärkreislauf des zweiten Wärmetauschers weiter zu betreiben und sukzessive die Temperatur des Sekundärkreislaufes zu erhöhen, um den Verlust an Energie im Primärkreislauf beim Wiederanfahren zu kompensieren, wobei vorzugsweise der Druck in der KZE (11, 30) aufrecht erhalten wird, wobei vorzugsweise der Druck in der KZE (11, 30) über einem Sättigungsdruck liegt.

11. Vorrichtung nach einem der Ansprüche 6 bis 10, wobei die Steuerungsvorrichtung weiter eine Zählvorrichtung für eine Aufsummierung von PE umfassen, die durch das Medium aufgenommen werden.

12. Vorrichtung nach Anspruch 11, wobei die Steuerungsvorrichtung weiter dazu ausgebildet ist, bei einem Stopp der Zufuhr von Medium zu der Vorrichtung entweder nach Ablauf einer vorgegebenen Stillstandzeit oder nach Überschreitung einer aufsummierten Anzahl von PE das Medium zu verwerfen oder mit dem Inhalt des Pufferbehältnisses (14) zu vermischen.

13. Vorrichtung nach einem der Ansprüche 6 bis 12, wobei die Steuerungsvorrichtung weiter dazu ausgebildet ist, bei Unterschreitung einer Temperatur der Heißhaltestrecke nach dem Anhalten des Flusses des Mediums im Primärkreislauf eines Minimalwerts, den Primärkreislauf für eine vorgegebene Zeitdauer wieder anzufahren, wobei der Minimalwert vorzugsweise einer Temperatur entspricht, die es noch möglich macht, dass das Medium im Primärkreislauf von dem Sekundärkreislauf nachheizbar ist.

14. Vorrichtung nach einem der Ansprüche 1 bis 13, wobei das Pufferbehältnis (14) mit Leiteinrichtungen und/oder Leitelementen, wie beispielsweise Umlenkblechen, versehen ist.

15. Vorrichtung nach einem der Ansprüche 1 bis 14, wobei ein Füllstand des Pufferbehältnisses (14) über der Abfüllvorrichtung (20), insbesondere über einem Abfüllventil der Abfüllvorrichtung (20), liegt.

16. Verfahren zur Pasteurisierung und Abfüllung von Medium in Behälter (21),
**dadurch gekennzeichnet, dass**
ein Befüllen der Behälter (21) mit dem Medium mittels einer Vorrichtung nach einem der Ansprüche 1 bis 15 pufferfrei mittels der Abfüllvorrichtung (20) durchgeführt wird, wobei das Verfahren die folgenden Schritte umfasst:
- Pasteurisieren des Mediums in der KZE (11, 30),
- danach Puffern des pasteurisierten Mediums in dem Pufferbehältnis (14),
- danach Abfüllen des pasteurisierten Mediums in die Behälter (21), wobei das pasteurisierte Medium pufferfrei von dem Pufferbehältnis (14) zu der Abfüllvorrichtung (20) transportiert wird.

## Claims

1. Device for pasteurising and filling medium into containers (21), the device comprising:
- a short time heating system (11, 30) for pasteurising the medium,
- a single buffer container (14) downstream of the short time heating system (11, 30) for receiving the medium,
- a rotary filling device (20) downstream of the buffer container (14) with at least one filler valve (19) for filling the containers (21) with the medium,
**characterised in that**
the filling device (20) is in communication with the buffer container (14) in a buffer-free manner and only pipes (22, 25) and/or one or more rotary distributors (23) are present between the filling device (20) and the buffer container (14).

2. Device according to claim 1, where the single buffer container (14) is formed as a vessel or ring container of the filling device (20) or where the buffer container (14) is formed as a buffer tank of the short time heating system (11, 30).

3. Device according to claim 1 or 2, where the short time heating system (11, 30) comprises a primary circuit for the medium and a secondary circuit, where the secondary circuit serves as a heating circuit to heat the medium in the primary circuit, where the primary circuit preferably runs through a first heat exchanger (5), a second heat exchanger (6) connected downstream of the first heat exchanger (5) and a heat retention section (7) downstream of the second heat exchanger (6), where the secondary circuit preferably runs through the second heat exchanger (6) and a third heat exchanger (10), where the short time heating system (30) further comprises a cooling circuit which is in thermal contact with the primary circuit via a fourth heat exchanger (31).

4. Device according to one of the claims 1 to 3, where the filling device (20) comprises a proportional valve for controlling and/or regulating a filling flow of medium into the containers (21), where the proportional valve is preferably configured to control and/or regulate various predetermined filling flows and/or to control and/or regulate stepless filling flows, where the filling device (20) is preferably formed as a filler carousel.

5. Device according to one of the claims 1 to 4, further comprising a preloading device (16) for preloading the buffer container (14) with carbon dioxide or with a carbon dioxide-nitrogen mixture.

6. Device according to one of the claims 1 to 5, further comprising a control device.

7. Device according to claim 6, where the control device is configured to reduce performance of the short time heating system (11, 30) in proportion to the filler performance, when filler performance of the filling device (20) is reduced, preferably up to 50% of a rated performance of the short time heating system (11, 30), and/or where the control device is further configured to increase the performance of the short time heating system (11, 30) in proportion to the filler performance, when filler performance of the filling device (20) is increased, preferably up to the rated performance of the short time heating system (11, 30).

8. Device according to claim 6 or 7, where the control device is further configured to control a maximum filling level of the buffer container (14) in such a way that no measurable and/or gustatory impairment of the medium quality occurs in the event of mixing with the possibly overpasteurised medium, where the ratio between the system content and a container volume of the buffer container is between 0.05 : 1 and 0.5 : 1, preferably between 0.1 : 1 and 0.3 : 1.

9. Device according to one of the claims 6 to 8, wherein the control device is further configured to perform temperature control and keep a predetermined number of pasteurisation units, PUs, of the medium constant and/or perform a defined overflow of the medium back into an inlet of the short time heating system (11, 30).

10. Device according to one of the claims 6 to 9, where the control device is configured to operate the short time heating system (11, 30) at a minimum performance when the filling device (20) stops, preferably at 50% of the rated performance, and/or to carry out a defined overflow of the medium back into an inlet of the short time heating system (11, 30), to fill the buffer container (14) up to a maximum filling level, to stop the supply of medium to the device when the maximum filling level has been reached, to stop the primary circuit under defined conditions, to continue operating the secondary circuit of the second heat exchanger and to successively increase the temperature of the secondary circuit in order to compensate for the loss of energy in the primary circuit when restarting, where the pressure in the short time heating system (11, 30) is preferably maintained, where the pressure in the short time heating system (11, 30) is preferably above a saturation pressure.

11. Device according to one of the claims 6 to 10, where the control device further comprises a counter for summing PUs that are received by the medium.

12. Device according to claim 11, where the control device is further configured to discard the medium or to mix it with the contents of the buffer container (14) when the supply of medium to the device stops either after a predetermined standstill period has expired or after a summed number of PUs has been exceeded.

13. Device according to one of the claims 6 to 12, where the control device is further configured to restart the primary circuit for a predetermined period of time when a temperature of the heat retention section drops below a minimum value after the flow of the medium in the primary circuit has stopped, where the minimum value preferably corresponds to a temperature that still makes it possible that the medium in the primary circuit can be reheated by the secondary circuit.

14. Device according to one of the claims 1 to 13, where the buffer container (14) is provided with guide devices and/or guide elements, such as baffles.

15. Device according to one of the claims 1 to 14, where a filling level of the buffer container (14) is above the filling device (20), in particular above a filling valve of the filling device (20).

16. Method for pasteurising and filling medium into containers (21),
**characterised in that**
filling the containers (21) with the medium is performed by way of a device according to one of the claims 1 to 15 in a buffer-free manner using the filling device (20), the method comprising the steps of:
- pasteurising the medium in the short time heating system (11, 30),
- then buffering the pasteurised medium in the buffer container (14),
- then filling the pasteurised medium into the containers (21), where the pasteurised medium is transported in a buffer-free manner from the buffer container (14) to the filling device (20).

## Revendications

1. Dispositif de pasteurisation et le remplissage d'un milieu dans des récipients (21), le dispositif comprenant
- une unité de pasteurisation éclair (11, 30), pasteurisateur éclair, pour la pasteurisation du milieu,
- un seul récipient tampon (14) en aval du pasteurisateur éclair (11, 30) pour recevoir le milieu,
- un dispositif de remplissage rotatif (20) en aval du réservoir tampon (14) avec au moins une vanne de remplissage (19) pour le remplissage des récipients (21) avec le fluide,
**caractérisé en ce que**
le dispositif de remplissage (20) est relié sans tampon au réservoir tampon (14) et seules des conduites (22, 25) et/ou un ou plusieurs distributeurs rotatifs (23) sont présents entre le dispositif de remplissage (20) et le réservoir tampon (14).

2. Dispositif selon la revendication 1, dans lequel le récipient tampon unique (14) est conçu comme un récipient de chaudière ou un récipient annulaire du dispositif de remplissage (20) ou dans lequel le récipient tampon (14) est conçu comme un réservoir tampon du pasteurisateur éclair (11, 30).

3. Dispositif selon les revendications 1 ou 2, dans lequel le pasteurisateur éclair (11, 30) comprend un circuit primaire pour le fluide et un circuit secondaire, dans lequel le circuit secondaire sert de circuit de chauffage pour chauffer le fluide dans le circuit primaire, dans lequel de préférence le circuit primaire est chauffé par un premier échangeur de chaleur (5), un deuxième échangeur de chaleur (6) monté en aval du premier échangeur de chaleur (5) et une section de rétention de chaleur (7) montée en aval du deuxième échangeur de chaleur (6), dans lequel de préférence le circuit secondaire passe par le deuxième échangeur de chaleur (6) et un troisième échangeur de chaleur (10), dans lequel de préférence le pasteurisateur éclair (30) comprend en outre un circuit de refroidissement qui est en contact thermique avec le circuit primaire par l'intermédiaire d'un quatrième échangeur de chaleur (31).

4. Dispositif selon l'une des revendications 1 à 3, dans lequel le dispositif de remplissage (20) comprend une soupape proportionnelle pour la commande et/ou la régulation d'un flux de remplissage du milieu dans les récipients (21), dans lequel de préférence la soupape proportionnelle est conçue pour la commande et/ou la régulation de différents flux de remplissage prédéterminés et/ou pour la commande et/ou la régulation de flux de remplissage variables en continu, dans lequel de préférence le dispositif de remplissage (20) est conçu comme une soupape de remplissage.

5. Dispositif selon l'une des revendications 1 à 4, comprenant en outre un dispositif de précontrainte (16) pour précontraindre le récipient tampon (14) avec du dioxyde de carbone ou avec un mélange de dioxyde de carbone et d'azote.

6. Dispositif selon l'une quelconque des revendications 1 à 5, comprenant en outre un dispositif de commande.

7. Dispositif selon la revendication 6, dans lequel le dispositif de commande est conçu pour réduire une puissance du pasteurisateur éclair (11, 30) proportionnellement à la puissance de remplissage, de préférence jusqu'à 50 % d'une puissance nominale du pasteurisateur éclair (11, 30), lorsqu'une puissance de remplissage du dispositif de remplissage (20) est réduite, et/ou dans lequel le dispositif de commande est en outre conçu pour augmenter la puissance du pasteurisateur éclair (11, 30) proportionnellement à la puissance de remplissage, de préférence jusqu'à la puissance nominale du pasteurisateur éclair (11, 30), lorsque la puissance de remplissage du dispositif de remplissage (20) est augmentée.

8. Dispositif selon les revendications 6 ou 7, dans lequel le dispositif de commande est en outre conçu pour commander un niveau de remplissage maximal du récipient tampon (14) de telle sorte qu'il n'y ait pas d'altération mesurable et/ou gustative de la qualité du milieu en cas de mélange avec un milieu éventuellement surpasteurisé, dans lequel le rapport entre le contenu du système et un volume du récipient tampon est de préférence compris entre 0,05:1 et 0,5:1, de préférence entre 0,1:1 et 0,3:1.

9. Dispositif selon l'une des revendications 6 à 8, dans lequel le dispositif de commande est en outre conçu pour effectuer un contrôle de température et maintenir constant un nombre prédéterminé d'unités de pasteurisation, PE, du milieu et/ou pour effectuer un débordement défini du milieu en retour dans une entrée du pasteurisateur éclair (11, 30).

10. Dispositif selon l'une des revendications 6 à 9, dans lequel le dispositif de commande est en outre conçu pour faire fonctionner le pasteurisateur éclair (11, 30) à une puissance minimale, de préférence 50 % de la puissance nominale, lorsque le dispositif de remplissage (20) est arrêté et/ou pour effectuer un retour de débordement défini du milieu dans une entrée du pasteurisateur éclair (11, 30), pour remplir le récipient tampon (14) jusqu'à un niveau de remplissage maximal, pour arrêter l'alimentation en milieu du dispositif lorsque le niveau de remplissage maximal est atteint, arrêter le circuit primaire dans des conditions définies, continuer à faire fonctionner le circuit secondaire du second échangeur de chaleur et augmenter successivement la température du circuit secondaire afin de compenser la perte d'énergie dans le circuit primaire lors du redémarrage, de préférence maintenir la pression dans le pasteurisateur éclair (11, 30), la pression dans le pasteurisateur éclair (11, 30) étant de préférence supérieure à une pression de saturation.

11. Dispositif selon l'une quelconque des revendications 6 à 10, le dispositif de commande comprenant en outre un dispositif de comptage pour une sommation de PE absorbé par le milieu.

12. Dispositif selon la revendication 11, dans lequel le dispositif de commande est en outre adapté 35 pour jeter ou mélanger le milieu avec le contenu du récipient tampon (14) lorsque l'alimentation en milieu de le dispositif est arrêtée soit après qu'un temps d'arrêt prédéterminé s'est écoulé, soit après qu'un nombre accumulé de PE est dépassé.

13. Dispositif selon l'une des revendications 6 à 12, dans lequel le dispositif de commande est en outre adapté pour redémarrer le circuit primaire pendant une période de temps prédéterminée si la température de la section de maintien de la chaleur tombe en dessous d'une valeur minimale après que le flux du milieu dans le circuit primaire s'est arrêté, dans lequel la valeur minimale correspond de préférence à une température qui permet encore au milieu dans le circuit primaire d'être réchauffé par le circuit secondaire.

14. Dispositif selon l'une des revendications 1 à 13, dans lequel le récipient tampon (14) est pourvu de dispositifs de guidage et/ou d'éléments de guidage, tels que des chicanes.

15. Dispositif selon l'une des revendications 1 à 14, dans lequel un niveau de remplissage du récipient tampon (14) se trouve au-dessus du dispositif de remplissage (20), en particulier au-dessus d'une soupape de remplissage du dispositif de remplissage (20).

16. Procédé de pasteurisation et de remplissage d'un milieu dans des récipients (21),
**caractérisé en ce que**
un remplissage des récipients (21) avec le milieu au moyen d'un dispositif selon l'une des revendications 1 à 15 est effectué sans tamponnement au moyen du dispositif de remplissage (20), le procédé comprenant les étapes suivantes :
- la pasteurisation du milieu dans le pasteurisateur éclair (11, 30),
- puis tamponner le milieu pasteurisé dans le récipient tampon (14),
- puis le remplissage du milieu pasteurisé dans les récipients (21), dans lequel le milieu pasteurisé est transporté sans tampon du récipient tampon (14) au dispositif de remplissage (20).
